# EUROPEAN PATENT APPLICATION

(11) **EP 4 332 700 A1**
(43) Date of publication of application: **06.03.2024**
(21) Application number: 23194400.0
(22) Date of filing: 30.08.2023
(51) Int. Cl.: G05B 19/401

(54) **WORKING CENTER FOR WORKING PIECES, PROVIDED WITH A SYSTEM FOR DETECTING THE CLEANING STATUS OF COMPONENTS OF THE WORKING CENTER AND OPERATION METHOD THEREOF**

(30) Priority: 30.08.2022 IT 202200017757
(71) Applicant: SCM Group S.p.A., 47921 Rimini (RN) (IT)
(72) Inventor: GESSI, Luca, 47921 RIMINI (RN) (IT); MAZZA, Michele, 47921 RIMINI (RN) (IT); BERTUCCIOLI, Alessandro, 47921 RIMINI (RN) (IT)
(74) Representative: Tiburzi, Andrea

(57) **Abstract**

The present invention relates to a working center (C) for working pieces comprising: a base (1) and a working plane (2) coupled to said base (1) and comprising: a plurality of supporting bars (21_{a,b,...,k,...n}), manually movable along said base (1), a plurality of movable elements (24_{a,b,...,k,...n}) for fixing said workpieces, manually movable along respective supporting bars (21_{a,b,...,k,...n}), at least one first reference element (41) for the position of said plurality of supporting bars (21_{a,b,...,k,...n}) along said base (1) and at least one second reference element (42_{a,b,...,k,...n}) for the position of said plurality of movable elements (24_{a,b,...,k,...n}) along said respective supporting bars (21_{a,b,...,k,...n}).

Said working center comprises a logic control unit (U) for the operation of said working center (C), in which configurations of the working plane (2) are stored for working said pieces and threshold values, as well as a detecting system (4) for detecting images of portions of said first reference element (41) and of the second reference element (42_{a,b,...,k,...n}) and for sending said images to the logic control unit (U). Said logic control unit (U) is configured to perform a comparison between said received images and said stored threshold values, in order to determine an index of the cleaning status (I_{P}) of the first reference element (41) and the second reference element (42_{a,b,...,k,...n}) and send signals corresponding to said determined index of the cleaning status (I_{P}).

The present invention relates also to an operation method of said working center.

## Description

The present invention relates to a working center for working pieces, provided with a system for detecting the cleaning status of components of the working center and operation method thereof.

The present invention also relates to the operation method of the working center.

### Field of the invention

In particular, the present invention relates to a numerically controlled working center for working pieces in wood, ceramic, plastic, glass, fiberglass and the like, in which said working center is provided with supporting bars for the workpieces and with movable elements, such as for example suction cups or clamps, coupled to the supporting bars, for fixing said pieces on said supporting bars.

In other words, said movable elements are movable fixing means which can be coupled/uncoupled to/from a supporting bar and sliding on said supporting bar.

Said working center comprises a base and a plurality of supporting bars, as well as a detecting system for detecting the cleaning status of components of the working center.

In particular, the detecting system is configured to detect the cleaning status of reference elements or positioning codes for the position of the supporting bars with respect to the base and the cleaning status of further reference elements or further positioning codes for the position of said movable elements along said supporting bars with respect to the supporting bars themselves.

The detecting system can be used to detect the position of any component of a working center, for which it is necessary to detect the cleaning status.

In the following, the expression "reference elements" or "positioning codes" more simply called "codes" will be used interchangeably, and the description will be directed to a numerically controlled working center provided with supporting bars and movable elements (such as example suction cups or clamps) for machining wooden panels, in which the supporting bars are moved manually by an operator with respect to the base and the movable elements positioned on a respective supporting bar are moved manually by an operator with respect to said supporting bar.

However, this description should not be considered limited to this specific use.

### Prior art

Numerically controlled working centers are known for carrying out milling and drilling mainly on wood and on materials with similar physical characteristics.

Said working centers comprise a working plane, on which the workpieces are fixed, and one or more working groups provided with a working unit, capable of having up to 5 interpolating axes.

Said working centers are provided with tool storages and automatic systems for replacing tools, making the machining process of the pieces completely automatic.

The working plane comprises a plurality of bars. Suction cups or clamps can be slidably coupled to each bar to fix a workpiece on said bar.

Said bars are provided with channels to generate a depression, so as to block the workpiece on one or more suction cups.

Up to six suction cups or clamps can be mounted on each bar of the working plane. Said suction cups or clamps can be decoupled from a bar and subsequently coupled onto said bar in a different position with respect to the position from which they were decoupled, based on the machining to be performed on the workpiece.

As is currently well known, in said working centers, the bars are manually positioned along the base of the working center and the suction cups or clamps are manually positioned along said bars.

Therefore, it is necessary for an operator to manually position the bars correctly with respect to the base and the suction cups or clamps with respect to said bars, in order to carry out machining on a workpiece.

Detecting systems are currently known for detecting the position of the bars along the base and the position of the suction cups or clamps along said bars.

These detecting systems provide for the use of reference elements (such as codes, magnetic linear gauges or magnetostrictives) which are coupled to the base and to the bars, a plurality of sensors arranged on the bars and on the suction cups or clamps, and processing means capable of detecting and determining the position of the bars and of the suction cups or clamps with respect to said reference elements.

However, the drawback of said known type of working centers is given by the fact that, during the machining of the pieces, the waste materials from the machining, such as for example dust and chips, can deposit on said reference elements, making it difficult detecting the position of the bars and/or the position of the suction cups or clamps, with respect to said reference elements.

### Aim of the invention

The aim of the present invention is to provide a working center in which the reference elements or positioning codes for the position of supporting bars with respect to the base of said working center and further reference elements or further positioning codes for the position of movable elements (such as suction cups and clamps) with respect to a respective support bar have a cleaning status such as to allow detection of the correct position of said supporting bars and said movable elements.

A further aim of the present invention is to provide a working center comprising at least one cleaning device for cleaning said reference elements and said further reference elements, so as to restore an optimal cleaning status of said reference elements and of said further reference elements.

Another aim of the present invention is to provide a operation method of the working center.

### Object of the invention

It is therefore specific object of the present invention a working center according to claim 1.

Preferred embodiments of the working center are disclosed in the dependent claims.

The present invention also relates to an operation method of said working center.

### Brief description of the figures

The present invention will be now described, for illustrative, but not limitative purposes, according to its embodiments, making particular reference to the enclosed figures, wherein:
Figure 1 is a side perspective view of the working center for working wooden pieces according to the invention, wherein said working center is provided with a detecting system for detecting the cleaning status of working center components;
Figure 2 is a perspective view from above of the base and of the working plane of the working center shown in Figure 1;
Figure 3 is a top view of a part of the base and the working plane shown in Figure 2;
Figure 4 is a top perspective view of the part of the base and the working plane shown in Figure 3
Figure 5 is a side view of a component of said working center;
Figure 6 is a front view of an enlargement of the component shown in Fig. 5;
Figure 7 is a front view of a part of a first reference element/second reference element, on which waste material is deposited due to the machining (for simplicity, Figure 7 shows a detail of a reference element which can be both a first reference element and a second reference element since said reference elements have the same structure); and
Figure 8 shows a block diagram of the operation method object of the present invention.

### Detailed description of the invention

In the various figures, similar parts will be indicated with the same reference numbers.

With reference to the attached Figures, the working center C is described for working pieces in wood, ceramic, plastic, glass, fiberglass and the like, according to the present invention.

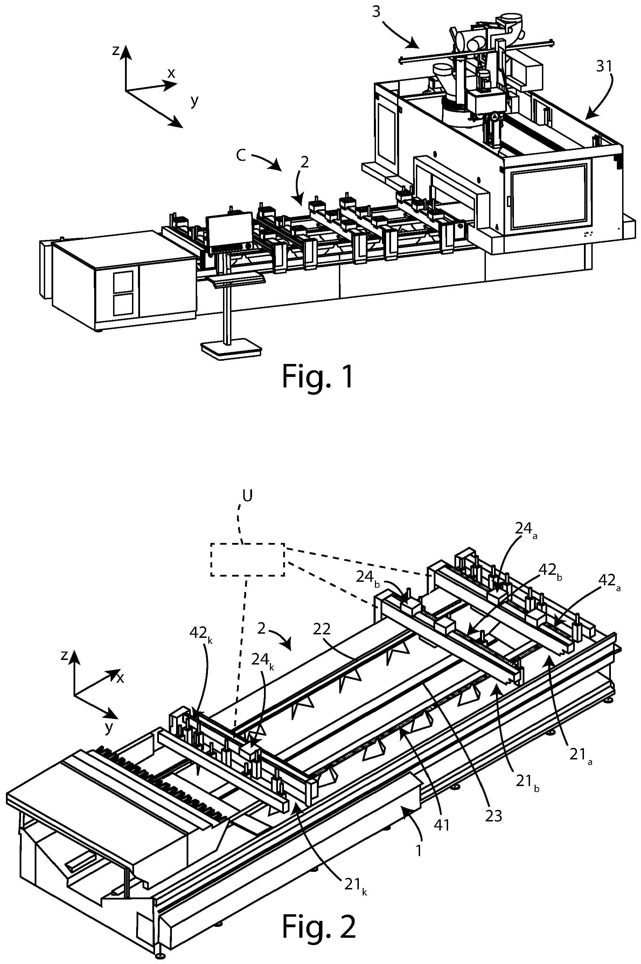

Said working center C essentially comprises:
- a base 1, through which said working center C rests on the ground,
- a working plane 2, for supporting workpieces,
- a cover casing 31, in which a working unit 3 (partially shown in Figure 1) is housed, provided with working tools for working pieces,
- a logic control unit U, and
- a detecting system 4.

Said base 1 has an elongated shape, the main dimension of which extends mainly according to a development direction parallel to an axis X of a Cartesian reference system X, Y, Z associated with said working center C.

Said working plane 2 is coupled to said base 1 and has an elongated shape, the main dimension of which extends mainly according to a development direction parallel to the X axis.

Said working plane 2 comprises a plurality of supporting bars 21_{a,b,...k,...n} for supporting workpieces.

Each supporting bar 21ₖ of said plurality of supporting bars 21_{a,b,...k,...n} is slidably coupled to said base 1 by means of a first guide 22 and a second guide 23, wherein said first guide 22 and said second guide 23 are integral with said base 1.

Each supporting bar 21ₖ of said plurality of supporting bars 21_{a,b,...k,...n} can be moved manually by an operator with respect to the base 1 along the X axis, through said first guide 22 and said second guide 23 of said base 1.

Each supporting bar 21ₖ of said plurality of supporting bars 21_{a,b,...k,...n} is arranged along an axis Y, orthogonal to said X axis.

In particular, each supporting bar 21ₖ of said plurality of supporting bars 21_{a,b,...k,...n} is arranged in a direction parallel to a Y axis orthogonal to the X axis.

A respective plurality of movable elements 24_{a,b,...k,...n}, such as suction cups or clamps, for fixing one or more workpieces, is slidably mounted on each supporting bar 21ₖ so that said workpieces are stably positioned on said movable elements 24_{a,b,...k,...n} during the machining of said pieces by said working unit 3.

Each of said movable elements of said plurality of movable elements 24_{a,b,...k,...n} can be moved manually by an operator on respective supporting bars of said plurality of supporting bars 21_{a,b,...k,...n} along the Y axis.

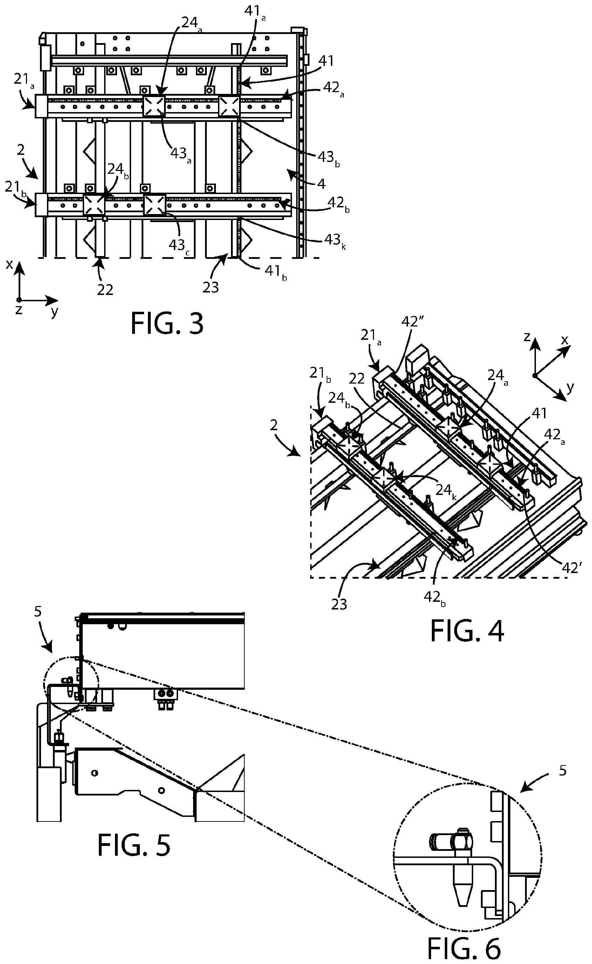

With particular reference to Figures 3 and 4, said working plane 2 comprises at least a first reference element 41 associated with a reference position for at least one supporting bar 21_{K}, i.e. a first code 41, and/or a plurality of second reference elements 42_{a,b,...k,...n}, each of which is associated with a reference position of a respective movable element (for example suction cup or clamp), i.e. a plurality of second codes 42_{a,b,...k,...n}, as well as a plurality of sensors 43_{a,b,...k,...n}, such as optical sensors or encoders able to decode said codes.

Said sensors 43_{a,b,...k,...n} can be provided with a reception and transmission module in wireless mode.

In particular, said first reference element 41 is arranged on the base 1 and each second reference element 42_{a,b,...k,...n} is arranged on a respective supporting bar 21_{a,b,...k,...n}.

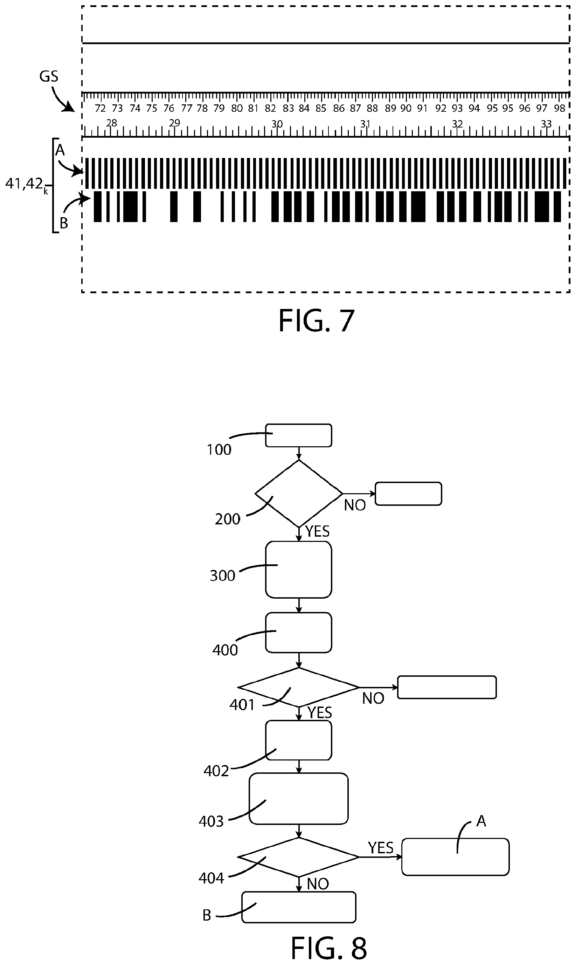

Figure 7 shows a detail referring to a part of said first code 41.

Said first code 41 comprises a first part or upper part A containing information on the cleaning status of said first code 41 and a second part or lower part B containing information on the position of the supporting bar with respect to the base 1.

Said first part A and said second part comprise a respective indicator.

In particular, in the embodiment being described, each indicator comprises black marks and white marks alternating with each other, so as to form a bar code.

Alternatively, without departing from the scope of protection of the present invention, said first code 41 can be of the QR-code type.

A graduated scale of GS values is arranged in the proximity of said first code 41 to allow an operator to manually position a supporting bar with respect to the base 1.

Similarly to the first code 41 shown in Figure 7, each second code 42k of said plurality of second codes 42_{a,b,...k,...n} comprises a first part or upper part A containing information on the status of the cleaning of the second code and a second part or lower part B containing information on the position of a movable element with respect to a supporting bar.

Said first part A and said second part B comprise a respective indicator.

Each indicator comprises black marks and white marks alternating with each other, so as to form a barcode.

Each second code 42_{a,b,...k,...n} of said plurality of second codes 42_{a,b,...k,...n} can be of the QR-code type.

A graduated scale of values is arranged in the proximity of each second code 42_{a,b,...k,...n} to allow an operator to manually position a movable element with respect to the supporting bar on which it is arranged.

Said detecting system 4 is adapted to detect the position of the supporting bars 21_{a,b,...k,...n} along said base 1 and the position of each of the movable elements 24_{a,b,...k,...n} along the respective supporting bars 21_{a,b,...k,...n}.

Furthermore, said detecting system 4 is adapted to detect the cleaning status of said first code 41 and/or of each second code 42ₖ of said plurality of second codes 42_{a,b,...k,...n}, providing a quality index I_{P}.

In particular, said first code 41 is of the binary type, has a longitudinal development along said axis X from a first end 41ₐ, called zero point or reference point, to a second end 41_{b}, and is arranged along all or part of said first guide 22 or said second guide 23.

Without departing from the scope of protection of the present invention, said first code 41 can be arranged on any portion of said base 1, according to a direction parallel to the axis X, between a first lateral end of the base 1 and a lateral end of the base 1 (opposite said first lateral end), or even on both said lateral ends.

Said first code 41 contains coded information.

In particular, the first code 41 contains information on the current position of said plurality of supporting bars 21_{a,b,...k,...n} with respect to the base 1, and the second codes 42_{a,b,...k,...n} contain information on the position current of the movable elements 24_{a,b,...k,...n} with respect to the supporting bar 21_{a,b,...k,...n} on which these movable elements 24_{a,b,...k,...n} are positioned. The first code 41 and said second codes 42_{a,b,...k,...n} can contain further redundancy information.

The position of a supporting bar 21_{a,b,...k,...n} with respect to the base 1 is the distance expressed in millimeters between each supporting bar 21ₖ and the first end 41ₐ of said first code 41.

This position is a main piece of information encoded in said first code 41.

In particular, said first code 41 is binary and is formed by 2" bits or marks where the n tuple unambiguously defines the position of each supporting bar 21k with respect to said base 1.

Since a bit corresponds to a pitch of 1 mm, it is possible to obtain different useful lengths of codes.

In particular, by using a tuple equal to 15 it is possible to have a code format of 2¹⁵ bit which is long 32768 mm, while by using a tuple equal to 17 it is possible to have a code format of 2¹⁷ bit which is long 131072 mm.

Therefore, said first code 41 is mainly used to identify the exact position, expressed in millimetres, of each supporting bar 21ₖ along said base 1, with respect to the first end 41ₐ of said code 41, as will be described in detail below.

Each second code 42ₖ of said plurality of second codes 42_{a,b,...k,...n} is arranged on a respective supporting bar 21ₖ and has the same structure as said first code 41 (i.e. the structure of said second code 42_{a,b,...k,...n} comprises a first part or upper part A and a second part or lower part A as mentioned above).

In particular, each second code 42ₖ of said plurality of second codes 42_{a,b,...k,...n} has a first end 42', called zero point or reference point, and a second end 42".

Each second code 42ₖ of said plurality of second codes 42_{a,b,...k,...n} is arranged along all or along part of a respective supporting bar.

Each second code 42ₖ is used to mainly identify the exact position of each movable element 24ₖ with respect to the respective supporting bar 21ₖ on which said movable element 24ₖ is mounted, as will be described in detail below.

Each sensor 43ₖ of said plurality of sensors 43_{a,b,...k,...n} is installed on respective supporting bars 21ₖ and on a respective movable element 24ₖ.

In this way, each supporting bar 21ₖ of said plurality of supporting bars 21_{a,b,...,k,...n} is provided with at least one sensor 43ₖ adapted to rea said first code 41.

Each mobile element 24ₖ of said plurality of movable elements 24_{a,b,...k,...n}, mounted on a respective supporting bar 21ₖ, is provided with at least one sensor 43ₖ adapted to read the second code 42ₖ arranged on said supporting bar 21ₖ.

Said plurality of sensors 43_{a,b,...k,...n} can also comprise further sensors, for example sensors to improve the code reading function or sensors for energy saving.

The configurations of the working plane 2 necessary to carry out the machining on the workpieces are stored in said logic control unit U and said control logic unit actuates the components of the working center C on the basis of the different machining to be performed.

Configurations of the working plane 2 means the exact position of said plurality of supporting bars 21_{a,b,...k,...n} with respect to said base 1 and the exact position of each movable element 24ₖ of said plurality of movable elements 24_{a,b,...k,...n} with respect to the respective supporting bar 21_{a,b,...,k,...n}.

Said logic control unit U also comprises a wireless reception and transmission module.

Each supporting bar 21ₖ and each movable element 24ₖ can comprise displaying means for displaying information relating to the information contained in the signals sent by the logic control unit U (i.e. information to indicate the direction in which to move a supporting bar and/or a movable element so that it is/are positioned correctly or to indicate the correct position), and/or feedback means for indicating to an operator the cleaning status of the codes, as well as preferably alarm means for generating an alarm signal when it is need to clear said codes.

Said feedback means can be configured to generate acoustic signals or tactile signals (for example when said feedback means comprises a vibrating element).

Said displaying means, said feedback means and preferably said alarm means are configured to receive the signals sent by said logic control unit U and provide an indication to an operator.

In a variant not shown, said displaying means, said feedback means and preferably said alarm means can be arranged on a control panel of said working center C.

In a further variant, the signals generated by said feedback means can be sent to mobile devices, such as tablets, smartphones, or wearable devices, via a wireless connection.

Said first code 41 can be serigraph printed on said base 1 and each second code of said plurality of second codes 42_{a,b,...k,...n} can be s serigraph printed on the respective supporting bar 21_{a,b,...,k,...n}, or applied by means of an adhesive layer.

With reference to Figures 5 and 6, said working center C further comprises at least one cleaning device 5 for cleaning the codes.

In a first embodiment, said cleaning device 5 is a respective nozzle integrally arranged on each supporting bar of said plurality of supporting bars 21_{a,b,...k,...n}, facing the first code 41 and therefore capable to convey blows of air on the respective first code 41, when the respective supporting bar 21ₖ slides along the respective first guide 22 or second guide 23, or when the respective supporting bar 21ₖ does not slide along the respective first guide 22 or second guide 23.

In a second embodiment, not shown in the Figure, said cleaning device is a respective nozzle arranged integrally on each supporting bar of said plurality of supporting bars 21_{a,b,...k,...n}, facing the second code 42ₖ and therefore capable of conveying blows of air onto the respective second code 42ₖ arranged on the supporting bar itself.

In a third embodiment, not shown in the figure, said cleaning device is a respective shuttle slidably coupled to each supporting bar of said plurality of supporting bars 21_{a,b,...k,...n} capable of conveying blows of air on the respective second code 42ₖ arranged on the supporting bar itself.

In a fourth embodiment, not shown in the figure, said cleaning device is a respective shuttle slidably coupled to each supporting bar of said plurality of supporting bars 21_{a,b,...k,...n} comprising a brush capable of cleaning the respective second code 42ₖ arranged on the supporting bar itself.

In general, a respective cleaning device can be associated with said first code 41 and with each second code 42ₖ.

The operation of the working center C for working wooden pieces, provided with a detecting system 4 described above, is performed as follows.

The following description refers to said first code 41, but also applies in an unchanged way to each second code 42ₖ of said plurality of second codes 42_{a,b,...k,...n}.

During machining of the piece, each sensor 43ₖ positioned on each supporting bar 21ₖ detects an image of the first part A of said first code 41 at which it is located.

The sensor 43ₖ detects a portion of the first upper A of the first code 41 placed on the base 1 at the supporting bar 21_{K} on which said sensor 43_{K} is located.

Operationally, the sensor 43ₖ is positioned on the supporting bar at a certain distance from the first code 41 and is capable of detecting a portion of the first code 41 itself.

Said logic control unit U performs a method for determining a quality index I_{P} of the cleaning status of the first code 41.

The same method is used to determine a quality index I_{P} of the cleaning status of each second code 42_{a,b,...k,...n}.

The presence of waste materials (such as machining chips, dust, stains, or dirt) on the first code 41 causes a change in the cleaning status of the first code 41.

For a better understanding of the invention, some notions are defined.

A detected or ideal image corresponds to a matrix of pixels.

In the embodiment being described, the sensor 43_{K} detects each pixel of a black and white image.

A certain number of bits per pixel, for example 8, is associated with each pixel.

Therefore, 2⁸ values, from 0 to 255, are associated with each pixel, where 255 corresponds to the white color and 0 to the black color.

Alternatively, the values can be normalized to a range of values between 0 and 1.

Although not described, the sensor can also detect a color image and/or the number of bits per pixel can be less or greater than 8.

An ideal image, i.e. an image of a clean code or in optimal cleaning conditions (and therefore free of dirt) is associated with a square wave, which regularly alternates between a maximum value and a minimum value.

The alternating of maximum values and minimum values is associated with the ideal visual appearance that the first part A of the first 41 code should have.

The white marks of an image, whether real or ideal, are associated with a maximum value, i.e. 255 (or 1 if normalized), and black marks are associated with a minimum value, i.e. 0.

However, in a real image detected by the sensor 43_{K}, the corresponding square wave can have maximum and/or minimum values with a normalized value that varies between 1 and 0.

This is due to the fact that in a real image corresponding to the first part A of the first code 41, the presence of any waste materials alters the perception of the black or white aspect of a pixel by the sensor 43ₖ.

Consequently, an intermediate value between the maximum value 255 (or 1 if normalized) and the minimum value 0 will be associated with a pixel that is not detected as totally white or totally black.

The square wave corresponding to the detection of the real image of the alternating black and white marks of the first code 41 can present a different trend from that of an ideal square wave, for example the square wave can present an alternation of intermediate values between 0 and 1 (or 255).

Once the square wave corresponding to the detected portion of the first part A of the first code 41 has been obtained, it is possible to perform a cross-correlation between the detected square wave with the ideal square wave.

The operation method of the working center performed by the logic control unit U will be described below.

In an analysis step 100, the sensor 43_{K} detects an image of a portion of the first part A of said first code 41 and said logic control unit U acquires said images and performs a cross-correlation between a square wave associated with an ideal image and a square wave associated with an image of the portion of the first part A of said first code 41.

The cross-correlation generates a sinusoidal waveform or sinusoidal function having maximum and minimum values in module equal to 1, with period equal to the distance between a white (or black) mark and the following white (or black) mark of the first code 41, for example 2mm.

In the following reference will be made to the absolute values of the maximum and minimum values of the sinusoidal function, although the sinusoidal function can also assume negative real values.

For simplicity, the sinusoidal function taken into account for the method has values between a maximum value equal to 1 and a minimum value equal to 0.

The higher will be the degree of dirt on the first code 1, and therefore the lower will be the cleaning status of the detected image, the lower will be the values of the maximum and minimum values, and therefore the lower will be the differences between the values of the extrema detected of the sinusoidal function obtained by the cross-correlation.

The sinusoidal function of an image detected in optimal cleaning conditions will have extrema in module tending to 1, while the sinusoidal function of an image detected in conditions of poor cleaning (and therefore an image detected in which the first code 41 is dirty) will have extrema tending to 0.

In the method described, since the sinusoidal function has values between zero and one, the extrema having a high value in terms of module (or amplitude) will have a value that tends to 1 or 0, while the extrema having a low value in terms of module (or amplitude) will have a value that tends to 0.5.

In a verification step 200 of the method, subsequent to the analysis step 100, the number of detected extrema is verified in order to verify whether the first code 41 is readable.

This takes place by verifying that the number of detected extrema is greater than or equal to a predetermined readability threshold value.

A first condition to be verified for an extremum to be considered detected is that there is at least one relative maximum or minimum point for the cross-correlation sinusoidal function.

Preferably, a second condition that the method can apply in the present step is that the value of a relative maximum of the cross-correlation function is higher than a respective threshold value or that the value of a relative minimum of the cross-correlation function is lower than a respective threshold value.

Optionally, the method can verify that the distance between the abscissas of successive extrema is actually equal to the distance that actually exists between the marks present in the first code 41.

In this way, the method is able to detect that an extremum detected by the sensor 43_{K} in a certain position actually corresponds to a white mark alternating with a black mark (or vice versa) of the first code 41, wherein the distance between said white mark and said black mark is 1mm, so as to avoid detection errors due to accumulation of dirt or in general residues.

In this embodiment being described, said readability threshold value is between 20 and 30, which is an experimental value to ensure that the position detected along the first code 41, through the second part B of the first code 41, is sufficiently accurate.

In other words, the readability threshold value corresponds to a minimum number of extrema that the sensor 43_{K} must be able to detect in order to minimize the risk of applying the method on an image of the first code 41 which has not been correctly detected (for example because the first code 41 is excessively dirty).

However, without departing from the scope of protection of the present invention, said readability threshold value can also have a different value.

If said verification step 200 on the extrema is negative, then the first code 41 is considered not detected and the error is reported.

If said verification step 200 on the extrema is positive, then the method is performed.

In a subsequent step to step 200, it is preferable that the method comprises a respective comparison step 300 between the value of an extremum and a value corresponding to a predetermined value associated with a cleaning level for each transition from a white mark to a black mark of the first code 41 (or vice versa), wherein said white mark and said black mark are present in the first part A of the first code 41.

In other words, this comparison step 300 allows to verify whether the amplitude of an extremum is lower than said predetermined value associated with the cleaning level.

More specifically, the method can include a verification step to verify that the difference between the value of one extremum and the value of the next extremum is greater than a threshold value.

This threshold value can be, for example, a value (for example measured experimentally or predetermined) corresponding to a cleaning level of the first code 41 considered acceptable.

This is equivalent to verifying that it is actually possible for the sensor 43_{K} to detect a transition between a white mark and a black mark (or vice versa) of the first 41 code.

If this verification is negative, the part of the first code 41 corresponding to the transition under examination is considered dirty, and the transition of the sinusoidal function is considered of poor quality.

When the verification is negative, it is preferable that the method comprises a step to replace the value of one or more extrema for which the result of the verification is negative with a predetermined value to be used in the subsequent steps of the method.

This predetermined value is chosen in such a way that each of said one or more extrema has a sufficiently low value, and therefore is associated with a dirty or poorly readable code.

This can be useful to prevent one or more image detections of the first code 41 from being erroneously considered of good quality (for example when the difference between two adjacent extrema is less than a threshold value) and therefore reliable for calculating a cleaning index I_{P} associated with the first code 41 in the subsequent steps of the method.

In a subsequent step to step 300, the method comprises a calculation step 400 for calculating said quality index I_{P}, i.e. the index of the cleaning status and therefore the degree of dirt.

In particular, this calculation includes the operation of linearly combining the maximum and minimum values, i.e. the extrema, of the cross-correlation to estimate the image quality.

In one aspect of the method, it is preferable that the coefficients of the linear combination have a value equal to 1, so as to consider the effective contribution of each extremum.

In an alternative, it is possible to use coefficients other than 1, for example to compensate for any distortions or aberrations (optical or otherwise) present in the detected images, due to the sensor 43_{K} or other detection devices or data transmission devices.

The result of the linear combination is a number representing said cleaning index I_{P} associated with the first code 41.

The smaller the result of the linear combination, the lower the quality of the detected image and, therefore, the greater the dirt present on the first 41 code.

The calculation step 400 can optionally comprises the step of normalizing the result of the linear combination in a range from 0 to 10, so that if the cleaning index I_{P} tends to the value 0, the image quality is considered poor and therefore the first code 41 will be considered dirty, while if the cleaning index I_{P} tends to the value 10 the image quality is considered acceptable and therefore the first code 41 will be considered clean.

After the calculation step 400, it is preferable that the method comprises a verification step 401 to verify that the obtained cleaning index I_{P} is greater than a predetermined value, so that the sensor 43_{K} detects the second part B of the first code 41 containing a information on the position of the supporting bar 21_{K} with respect to the first code 41.

Regardless of whether the cleaning index I_{P} is greater than a predetermined value, the method comprises a detection step 402, in which an image of a further portion of the second part B of the first code 41 is detected by the sensor 43_{K} and a waveform corresponding to said detected image (which is a real image) is associated with a succession of white marks and black marks of the first code 41 detected by said sensor 43_{K}.

After the detection step 402, the method comprises a conversion step 403 for converting the maximum values and minimum values of said waveform into a binary sequence associated with a position of the supporting bar 21_{K} (on which said sensor 43_{K} is mounted).

The method preferably comprises a verification step 404 for verifying whether said binary sequence is present among the binary sequences stored in the control logic unit U, each of which is associated with a respective position of the supporting bar 21_{K}.

If an error is detected, the method generates an output A to indicate that the first code 41 is not readable.

If no error is detected, the method generates an output B to indicate that the first code 41 is readable and therefore the position of the supporting bar 21_{K} with respect to the base 1 is correctly identified.

With reference to the first code 41 and to the second codes 42_{a,b,...k,...n}, said first code 41 and each second code 42ₖ are maximum length codes called MLS (*Maximum Length Sequence*) codes.

As can be seen in Figure 7 generally referred to a first code and a second code, the first part A of each code comprises white marks alternating with black marks in a regular manner and the second part B of each code comprises white marks alternating with black marks irregularly.

In particular, the second part B can include more black marks side by side and more white marks side by side.

Several marks of the same colour placed side by side create the visual effect of a band whose width depends on the number of marks placed side by side.

However, the sensor 43_{K} is configured to distinguish individual marks of the same colour even if those same-coloured marks are side by side.

Each mark (regardless of colour) has a predetermined width, for example 1mm.

As already mentioned, a respective value detected by the sensor 43_{K} and tending to 1 (or 255) is associated with each white mark of the part B of the code, and a respective value detected by the sensor 43_{K} and tending to 0 is associated with each black mark of the part B of the code.

Therefore, a succession of white marks and black marks present in the part B of the code is associated with a sequence of bits contained in the MLS code.

Differently from the real image detected referring to the first part A of the code, as regards the second part B of the code, the sensor 43_{K} will detect a real image corresponding to a waveform whose maximum and minimum values will not regularly alternate between them, but will be arranged in an irregular succession.

However, the succession of marks of the second part B of the code is such that the detected image corresponds uniquely to a single position along the code.

This is possible because, given an arbitrary number of bits, for example a number of bits n=15, the algorithm generates an MLS code which is a sequence of 2^15 bits = 32768 bits.

Each bit corresponds to a black or white mark of the code.

The fundamental property of an MLS code thus generated is that, taken a string of 15 bits within the entire sequence of 32768 bits generated by said algorithm, this string of 15 bits is unique, i.e. there is only one position where said string of 15 bits is contained in said sequence of 32768 bits.

In order for the respective position of each supporting bar 21ₖ and of each movable element 24ₖ to be unambiguously detected by the detecting system 4, the string of bits included in the respective code must be unambiguously associated with a linear position.

Therefore, by virtue of the typical property of an MLS code, if an operator manually positions a supporting bar 21ₖ or a movable element 24ₖ, for example at a distance of 500mm from a first end of a respective code, said code (which is printed on the base or on a supporting bar) must necessarily show a unique binary sequence that corresponds to said distance of 500mm.

If not, i.e. if a string of 15 bits appeared more than once (for example a first time at a position expressed by a distance equal to 250mm and a second time at a position expressed by a distance equal to 500mm), it would not be possible to determine the actual position of a supporting bar 21ₖ or a movable element 24ₖ.

Hence the coding is such that, having read the code in any point of the 32768mm associated with the sequence of 32768 bits, the string of 15 bits is unique in the sequence of 32768 bits and therefore also in the entire length of the 32768mm of the code.

The string of 15 bits is used as an access index of a decoding table to one of the 32768 values is associated with a respective real position of a supporting bar or a movable element identified by the respective code.

It is preferable that the string of 15 bit is converted to base 10 to be used as an access index to the decoding table.

Therefore, the string of 15 bits of the MLS code associated with a code (which can be the first code 41 or a second code 42_{K}) is decoded to obtain the only position in 32768mm corresponding to said string of 15 bits.

After converting the read position into a value expressed in mm, it is preferable to carry out a verification step 404 to verify the correctness of the read code.

To verify the correctness of the read code, it is possible to verify whether a string with a number of bits greater than 15 bits, for example a string of 30 bits, is contained in the sequence of bits of the MLS code.

In fact, given that only one position corresponds to each string of 15 bits, considering only 15 bits it could happen that, in the event of a reading error, the decoding result is a position of a supporting bar or of a movable element different from the its real position.

This is due to the fact that the string of bits used to access the decoding table is altered and therefore the obtained position of the supporting bar or movable element does not correspond to the real position.

In fact, if the string contains a number of bits greater than 15 bits, the probability that a string of 30 bits is repeated in two points of the code tends to zero.

If an error is found, the output A of the method indicates that the code is not readable.

If no errors are found, the output B of the method indicates that the code is readable and therefore the position of the supporting bar or the movable element is correctly identified.

Said logic control unit U can be configured to acquire said cleaning index I_{P} and send corresponding signals to said displaying means and/or to said feedback means so that an operator knows the cleaning status of the supporting bars 21_{a,b,...,k,...n} and of the movable elements 24_{a,b,...k,...n} and can activate said cleaning device 5, if the cleaning index I_{P} is lower than a predetermined value, for example 5.

Said logic control unit U and said plurality of supporting bars 21_{a,b,...,k,...n} communicate with each other via the wireless protocol, in particular Bluetooth, Bluetooth low energy, or wi-fi, or through a cable connection.

Similarly, said logic control unit U and said plurality of movable elements 24_{a,b,...k,...n} communicate with each other by means of the wireless protocol, in particular Bluetooth, Bluetooth low energy, or wi-fi, or through a cable connection.

Finally, also said plurality of supporting bars 21_{a,b,...,k,...n} and plurality of movable elements 24_{a,b,...k,...n} communicate with each other by means of the wireless protocol, in particular Bluetooth, Bluetooth low energy, or wi-fi, or through a cable connection.

Said detecting system 4 can be used on a plurality of working centers where it is necessary to use several working centers to carry out a specific machining.

Furthermore, said logic control unit U can be configured to send the output of the method described above to said displaying means and/or to said feedback means so that an operator understands whether the code is readable or not.

### Advantages

Advantageously, the working center, object of the present invention, allows an operator to manually move one or more supporting bars 21_{a,b,...,k,...n} with respect to the base 1 until each supporting bar is correctly positioned with respect to the base 1 and/or one or more movable elements 24_{a,b,...k,...n} (arranged on said one or more supporting bars 21_{a,b,...,k,...n}) with respect to a respective supporting bar until said one or more movable elements 24_{a,b,...k,...n} is correctly positioned with respect to said respective supporting bar, through the aid of a detecting system 4 that is simple, effective and of limited cost.

The present invention has been described for illustrative, but not limitative purposes with reference to its preferred embodiments, but it well evident that one skilled in the art can introduce variants and/or modifications to the same, without departing from the relevant scope as defined in the enclosed claims.

## Claims

1. Working center (C) for working pieces comprising:
- a base (1) for supporting said working center (C);
- a working plane (2), coupled to said base (1), for supporting workpieces, comprising in turn
- a plurality of supporting bars (21_{a,b,...k,...n}), slidingly coupled and manually movable by an operator along said base (1);
- a plurality of movable elements (24_{a,b,...k,...n}) for fixing said workpieces, slidingly coupled and manually movable by an operator along respective supporting bars (21_{a,b,...,k,...n});
- at least one a first reference element (41) of the position of said plurality of said supporting bars (21_{a,b,...,k,...n}) along said base (1); and/or
- at least one second reference element (42_{a,b,...k,...n}) of the position of said plurality of movable elements (24_{a,b,...k,...n}) along said respective supporting bars (21_{a,b,...,k,...n});
- a logic control unit (U) to control the operation of said working center (C), in which configurations of said working table (2) for working said pieces are stored, **characterized**
**in that** said working center (C) comprises a detecting system (4), coupled to said working plane (2), adapted to detect images of portions of said at least one first reference element (41) and/or said at least one second reference element (42_{a,b,...k,...n}) and to send said images to said logic control unit (U),
**in that** predetermined image quality values are stored in said logic control unit (U);
**in that** said logic control (U) is adapted to perform a comparison between said received images and said stored predetermined values, to determine a quality index of the cleaning status (I_{P}) of said at least on first reference element (41) and/or a second reference element (42_{a,b,...k,...n}) and to send signals corresponding to said determined quality index of the cleaning status (I_{P}).

2. Working center (C) according to the preceding claim, wherein said working center comprises at least one cleaning device (5) capable of receiving said signals from said logic control unit (U) and to performing the cleaning of said at least one first reference element (41) and/or of said at least one second reference element (42_{a,b,...k,...n}).

3. Working center (C) according to the preceding claim, wherein said cleaning device (5) comprises a nozzle arranged at one end of each supporting bar (21ₖ) of said plurality of supporting bars (21_{a,b,...k,...n}) capable of conveying blows of air on the first reference element (41) arranged along said base (1) and/or on the respective second reference element (42_{a,b,...k,...n}) arranged on each supporting bar (21ₖ).

4. Working center (C) according to claim 2, wherein said cleaning device (5) is a shuttle slidingly coupled to each supporting bar (21ₖ) of said plurality of supporting bars (21_{a,b,...k,...n}), capable of conveying blows of air on the respective second reference element (42_{a,b,...k,...n}) placed on each supporting bar (21ₖ).

5. Working center (C) according to claim 2, wherein said cleaning device (5) is a shuttle slidingly coupled to each supporting bar (21ₖ) of said plurality of supporting bars (21_{a,b,...k,...n}) comprising a brush capable of cleaning the respective second reference element (42_{a,b,...k,...n}) placed on each supporting bar (21ₖ).

6. Working center (C) according to anyone of the preceding claims, wherein said plurality of supporting bars (21_{a,b,...k,...n}) and/or said plurality of movable elements (24_{a,b,...k,...n}) are configured to communicate with each other and with said logic control unit (U) wirelessly.

7. Working center (C) according to the preceding claim, wherein each supporting bar (21ₖ) and/or each movable element (24ₖ) and said logic control unit (U) are provided with a wireless transmitter and receiver module.

8. Working center (C) according to anyone of the preceding claims, wherein
said at least one first reference element (41) is a first code (41), arranged on said base (1), and
wherein
said at least one second reference element (42_{a,b,...k,...n}) is a plurality of second codes (42_{a,b,...k,...n}), each arranged on the respective supporting bar (21_{a,b,...,k,...n}).

9. Working center (C) according to the preceding claim, wherein said first code (41) is serigraph printed on said base (1) and each second code of said plurality of second codes (42_{a,b,...k,...n}) is serigraph printed on the respective supporting bar (21_{a,b,...k,...n}) or applied by means of an adhesive layer.

10. Working center (C) according to the preceding claim,
wherein said detecting system (4) comprises a plurality of sensors (43_{a,b,...,k,...n}),
wherein at least one sensor (43_{a,b,...k,...n}) capable of detecting an image of each of said first code (41) is installed on each supporting bar (21_{a,b,...k,...n}) and/or,
wherein at least one sensor (43_{a,b,...k,...n}) capable of detecting an image of each second code of said plurality of second codes (42_{a,b,...k,...n}) is installed on each movable elements (24_{a,b,...k,...n}).

11. Working center (C) according to anyone of the preceding claims, wherein each supporting bar (21ₖ) and/or each movable element (24ₖ) comprises displaying means for displaying information contained in said signals sent by said logic control unit (U) and/or feedback means of acoustic and/or tactile type, to provide a feedback to the operator.

12. Working center (C) according to anyone of the preceding claims, wherein said working center (C) comprises a control panel and said displaying means and/or said feedback means are arranged on said control panel.

13. Working center (C) according to anyone of the preceding claims, wherein said signals are sent to mobile devices, such as tablets, smartphones, or wearable devices, via a wireless connection.

14. Working center (C) according to claim 10, wherein said sensors (43_{a,b,...k,...n}) are optical type sensors.

15. Working center (C) according to anyone of the preceding claims, wherein said at least one first reference element (41) and at least one second reference element (42_{a,b,...k,...n}) are of the binary type or of the QR-code type.

16. Operation method of a working center (C) according to any one of the preceding claims 1-15, wherein it comprises the following steps:
(100). detecting through said detecting system (4) an image of a portion of said at least one first reference element (41) and/or of said second reference element (42_{a,b,...k,...n}) and performing by said logic control unit (U) a cross-correlation between a square wave associated with an ideal image and a square wave associated with an image of said portion of said at least one first reference element (41) and/or of said second reference element (42_{a,b,...k,...n}) for generating a respective sinusoidal function comprising one or more extrema;
(200). performing a check to verify that the number of extrema of said sinusoidal function is greater than or equal to 1;
(400). calculating an quality index I_{P} through a linear combination of values associated with said one or more extrema;
(402). detecting through said detecting system (4) an image of a further portion of said at least one first reference element (41) and/or of said second reference element (42_{a,b,...k,...n}) and associating by said logic control unit (U) a waveform to said detected image, wherein said waveform comprises one or more maximum values and/or one or more minimum values;
(403). converting said maximum and minimum values of said waveform into a binary sequence associated with a position of said supporting bar (21_{a,b,...k,...n}) or of said movable element (24_{a,b,...k,...n}).
